# EUROPÄISCHE PATENTANMELDUNG

(11) **EP 3 968 701 A1**
(43) Veröffentlichungstag der Anmeldung: **16.03.2022**
(21) Anmeldenummer: 20195988.9
(22) Anmeldetag: 14.09.2020
(51) Int. Cl.: H04W 48/18, H04M 1/71, H04M 1/72454, H04M 1/738, H04W 24/04, H04W 88/08

(54) **INTERNETZUGANSEINRICHTUNG MIT USB-TETHERING ALS AUSFALLSICHERHEIT**

(71) Anmelder: Deutsche Telekom AG, 53113 Bonn (DE)
(72) Erfinder: KIEFER, Carsten, 64293 Darmstadt (DE); WEHMSCHULTE, Markus, 53119 Bonn (DE); HARMENING, Uwe, 60320 Frankfurt/Main (DE)
(74) Vertreter: Brandt & Nern Patentanwälte

(57) **Zusammenfassung**

Die Erfindung betrifft ein Verfahren zum Betreiben einer Internetzugangseirichtung und eine zur Durchführung des Verfahrens geeignete Internetzugangseinrichtung, nämlich eine Zugangseinrichtung (1), über welche mit der Zugangseinrichtung (1) in einem lokalen Netzwerk LAN verbundenen Endgeräten (2; 2'; 2") ein Zugang zum Internet (5) ermöglicht wird. Diese Zugangseinrichtung (1) stellt den Zugang zum Internet (5) in einer Standardbetriebsart über das DSL-Festnetz her, ist aber außerdem in einer Ausweichbetriebsart betreibbar, bei welcher die mit der Zugangseinrichtung im LAN verbundenen Endgeräte (2; 2'; 2") den Zugang zum Internet mittels der Zugangseinrichtung (1) und einer mit dieser direkt verbundenen Mobilfunkendeinrichtung (3) mit aktiviertem Tethering-Modus über das Mobilfunknetz (6) erhalten. Erfindungsgemäß wechselt dabei die dazu ausgebildete Zugangseinrichtung (1), gesteuert durch eine von ihr verarbeitete Programmanwendung, bei Detektion einer mit ihr direkt verbundenen Mobilfunkendeinrichtung (3) mit aktiviertem Tethering-Modus, zumindest sofern die Zugangseinrichtung (1) außerdem eine DSL-Störung feststellt, automatisiert in die Ausweichbetriebsart.

## Beschreibung

Die Erfindung betrifft eine Internetzugangseinrichtung, das heißt ein Verfahren zum Betreiben einer derartigen Einrichtung und eine zur Durchführung dieses Verfahrens speziell ausgebildete Internetzugangseinrichtung.

Im Bürobetrieb und im häuslichen Bereich werden für die Nutzung des Internet zumeist Zugangseinrichtungen verwendet, welche einer Mehrzahl sich mit ihnen gemeinsam in einem LAN, also in einem lokalen Netzwerk, befindenden Endgeräten einen Zugang zum Internet über das DSL-Festnetz ermöglichen. Über derartige Internetzugangseinrichtungen und eine von diesen in das Internet aufgebaute DSL-Verbindung erhalten dabei Endgeräte, wie insbesondere PCs und Laptops, oder über WLAN mit der betreffenden Zugangseinrichtung verbundene mobile Endgeräte (beispielsweise Tablet-PCs oder Smartphones) sowie zum Beispiel auch diverse Heimgeräte der Unterhaltungselektronik, Zugang zum Internet unter Nutzung des Festnetzes. Häufig fungieren dazu entsprechend ausgebildete Zugangseinrichtungen gleichzeitig als Router für das LAN, mit dem sie verbunden sind, und für die darin betriebenen Geräte.

Jedoch kann es immer möglich sein, dass das Internet über den von der Zugangseinrichtung verwendeten DSL-Anschluss, beispielsweise wegen einer temporären DSL-Störung, für eine gewisse Zeit nicht nutzbar ist. Aus diesem Grund, möglicherweise aber auch unabhängig hiervon, bieten moderne Internetzugangseinrichtungen, welche standardmäßig einen DSL-Zugang nutzen, darüber hinaus teilweise die Möglichkeit, im Zusammenwirken mit einer dafür ausgebildeten Mobilfunkendeinrichtung auf eine Nutzung des Internet über das Mobilfunknetz auszuweichen.

Dazu ist die vorgenannte Mobilfunkeinrichtung, beispielsweise ein Mobiltelefon oder ein mit einer SIM-Karte ausgestatteter Tablet-PC, vorzugsweise über einen USB-Anschluss direkt mit der Zugangseinrichtung zu verbinden und in der Mobilfunkendeinrichtung ein als Tethering bezeichneter Modus zu aktivieren. Darüber hinaus ist es außerdem erforderlich, zumeist über ein Website-Interface der Zugangseinrichtung, die Nutzung des durch die Mobilfunkendeinrichtung zur Verfügung gestellten Tethering freizugeben. Für Letzteres muss sich der Nutzer bei der Internetzugangseinrichtung, respektive bei deren Website-Interface, typischerweise einhergehend mit dem Erfordernis einer Authentifizierung, anmelden und dann unter Nutzung der ihm dargebotenen Menüstruktur die Freigabe für die Verwendung des Tethering erteilen.

Umgekehrt muss der Nutzer, sofern er später mittels der Zugangseinrichtung wieder über das DSL-Festnetz in das Internet gehen will, das Tethering in der Zugangseinrichtung deaktivieren. Die hierfür erforderlichen Bedienschritte werden von vielen Nutzern als umständlich und daher wenig komfortabel angesehen. Gerade auch in der häuslichen Umgebung, in welcher entsprechende Internetzugangseinrichtungen teilweise von Nutzern verwendet werden, die weniger computer- und/oder technikaffin sind, kann sich ein Nutzer durch die für eine Verwendung des Tethering erforderlichen Bedienschritte gegebenenfalls auch überfordert fühlen. Abgesehen davon ist es auch denkbar, dass der Heimanwender im Einzelfalle gar nicht erkennt, dass eine vorübergehende DSL-Störung ursächlich dafür ist, dass ihm zeitweise eine Nutzung des Internet nicht möglich ist.

Aufgabe der Erfindung ist es, eine Lösung für die zuvor geschilderten Probleme bereitzustellen. Eine dies ermöglichende Internetzugangseinrichtung soll ihren Nutzer insbesondere davon entbinden, die von der Internetzugangseinrichtung grundsätzlich gebotene Möglichkeit einer Verwendung des Internet im Wege des Tethering mittels einer mit der Internetzugangseinrichtung gekoppelten Mobilfunkendeinrichtung, erst nach Ausführung entsprechender Bedienhandlungen an der Internetzugangseinrichtung nutzen zu können. Durch eine insoweit Abhilfe schaffende Internetzugangseinrichtung soll ein entsprechendes Verfahren zum Betreiben dieser Einrichtung bereitgestellt werden, das heißt die Internetzugangseinrichtung zur Durchführung eines entsprechenden Verfahrens geeignet sein.

Die Aufgabe wird durch ein Verfahren mit den Merkmalen des Patentanspruchs 1 gelöst. Eine die Aufgabe lösende, zur Durchführung des Verfahrens ausgebildete Internetzugangseinrichtung wird durch den ersten Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren zum Betreiben einer Zugangseinrichtung, über welche mit dieser Zugangseinrichtung in einem lokalen Netzwerk (LAN) verbundenen Endgeräten ein Zugang zum Internet ermöglicht wird, bezieht sich auf eine Zugangseinrichtung, welche den Zugang zum Internet in einer Standardbetriebsart über das DSL-Festnetz herstellt und in einer Ausweichbetriebsart die Nutzung des Mobilfunknetzes durch Tethering ermöglicht. In der vorgenannten Ausweichbetriebsart erhalten die mit der Zugangseinrichtung im LAN verbundenen Endgeräte den Zugang zum Internet mittels der Zugangseinrichtung und einer mit dieser direkt verbundenen Mobilfunkendeinrichtung mit aktiviertem Tethering-Modus über das Mobilfunknetz.

Erfindungsgemäß ist das Verfahren so gestaltet, dass die dazu ausgebildete Zugangseinrichtung, gesteuert durch eine von einer Verarbeitungseinrichtung der Zugangseinrichtung verarbeitete Programmanwendung, bei Detektion einer mit der Zugangseinrichtung direkt verbundenen Mobilfunkendeinrichtung mit aktiviertem Tethering-Modus, zumindest sofern die Zugangseinrichtung außerdem eine DSL-Störung feststellt, automatisiert in die Ausweichbetriebsart wechselt.

Demgemäß kann die Zugangseinrichtung je nach Implementierung des Verfahrens generell in die Ausweichbetriebsart schalten, sofern sie eine direkte Verbindung mit einer Mobilfunkendeinrichtung detektiert, bei welcher der Tethering-Modus aktiviert ist oder aber nur, dann jedoch in jedem Falle, wenn außer des Bestehens einer derartigen direkten Verbindung zu einer Mobilfunkendeinrichtung eine DSL-Störung festgestellt wird.

Was die Frage des Bestehens einer direkten Verbindung zu einer Tethering-fähigen Mobilfunkendeinrichtung sowie das Detektieren einer solchen Verbindung anbelangt, so kommen hierfür grundsätzlich unterschiedliche Möglichkeiten in Betracht. Demgemäß kann die Ausweichbetriebsart der Zugangseinrichtung aktiviert werden, sofern eine irgendwie geartete direkte Verbindung - das heißt insbesondere über Kabel oder über eine Kurzstreckenfunkverbindung - zu einer Mobilfunkendeinrichtung mit aktiviertem Tethering detektiert wird. Letzteres schließt grundsätzlich auch die Möglichkeit mit ein, dass die vorgenannte direkte Verbindung zu der Mobilfunkendeinrichtung mit aktiviertem Tethering über Bluetooth besteht. Bevorzugt wird aber eine Implementierung des Verfahrens, bei der die Zugangseinrichtung nur bei der Detektion einer mit ihr über einen USB-Port der Zugangseinrichtung verbundenen, sich im Tethering-Modus befindenden Mobilfunkendeinrichtung -jedenfalls zumindest bei Bestehen einer DSL-Störung - in die das Tethering nutzende Ausweichbetriebsart wechselt.

Sofern das erfindungsgemäße Verfahren in der Weise implementiert ist, dass die Zugangseinrichtung bei Bestehen oder beim Herstellen einer direkten Verbindung mit einer sich im aktivierten Tethering-Modus befindenden Mobilfunkendeinrichtung nur im Falle des Erkennens einer DSL-Störung in die Ausweichbetriebsart wechselt, ist es in Weiterbildung des Verfahrens zudem vorgesehen, dass die Zugangseinrichtung nach Einnahme der Ausweichbetriebsart, wiederum gesteuert durch die von ihr verarbeitete Programmanwendung, automatisiert in die Standardbetriebsart zurückwechselt, sofern für eine vorgegebene, in einem Speicher der Zugangseinrichtung hinterlegte Zeitdauer eine stabile DSL-Verbindung zum Internet besteht und durch die Zugangseinrichtung (im Zuge der Verarbeitung der angesprochenen Programmanwendung) festgestellt wird. Dabei kann die vorgenannte Zeitdauer des Bestehens einer stabilen DSL-Verbindung entweder werksseitig, das heißt insbesondere im Zusammenhang mit der Hinterlegung der schon mehrfach angesprochenen Programmanwendung in der Zugangseinrichtung oder beim Einrichten dieser Programmanwendung, fest eingestellt werden.

Alternativ ist es allerdings auch denkbar, dass diese Zeitdauer in einem Konfigurationsmodus der Zugangseinrichtung variabel einstellbar ist. Letzteres kann beispielsweise über eine Konfigurationswebsite (respektive ein Website-Interface) der Zugangseinrichtung mittels eines mit ihr in dem LAN verbundenen Endgeräts ermöglicht werden. Im Hinblick auf die schon angesprochenen Schwierigkeiten einiger Nutzer beim Umgang mit derartigen Konfigurationswebsites oder vergleichbaren Konfigurationsmenüs ist es dabei sicherlich als besonders vorteilhaft anzusehen, wenn werksseitig bereits eine entsprechende Zeitdauer in der Zugangseinrichtung hinterlegt ist, die dann aber dennoch bei Bedarf durch den kundigen Nutzer oder durch einen Administrator einer Firma verändert werden kann. Insoweit ist davon auszugehen, dass eine Grundeinstellung sinnvoll sein dürfte, bei welcher die Zeitdauer für das Umschalten in die Standardbetriebsart bei über eine Zeitdauer hinweg bestehender stabiler DSL-Verbindung initial auf 30 Minuten festgelegt ist.

Soweit vorstehend im Zusammenhang mit einer Implementierung des Verfahrens, bei welcher die Nutzung des Tethering nur im Falle des Bestehens einer DSL-Störung erfolgt, ausgeführt wurde, dass der Wechsel in die Ausweichbetriebsart bei (gleichzeitigem) Bestehen einer direkten Verbindung mit einer sich im aktivierten Tethering-Modus befindenden Mobilfunkendeinrichtung oder beim Aufbau einer solchen direkten Verbindung erfolgt, sind demnach im Kontext einer solchen Implementierung insbesondere folgende Szenarien von dem erfindungsgemäßen Verfahren umfasst:
a) Es besteht bereits eine von der Zugangseinrichtung detektierte DSL-Störung und es erfolgt ein Wechsel in die Ausweichbetriebsart sobald eine direkte Verbindung der Zugangseinrichtung mit einer sich im aktivierten Tethering-Modus befindenden Mobilfunkendeinrichtung hergestellt wird.
b) Es besteht eine direkte Verbindung der Zugangseinrichtung mit einer sich im aktivierten Tethering-Modus befindenden Mobilfunkendeinrichtung, aber es liegt zunächst keine DSL-Störung vor. Die Internetzugangseinrichtung arbeitet dann in der Standardbetriebsart, bei welcher sie den mit ihr im LAN befindlichen Endgeräten einen Zugang zum Internet über das DSL-Festnetz ermöglich. Tritt, bei weiterhin bestehender Direktverbindung mit der sich im aktivierten Tethering-Modus befindenden Mobilfunkendeinrichtung, eine DSL-Störung ein, wechselt die Internetzugangseinrichtung, gesteuert durch die von ihr verarbeitete Programmanwendung, in die Ausweichbetriebsart.

Eine die Aufgabe lösende, zur Nutzung des erfindungsgemäßen Verfahrens geeignete Internetzugangseinrichtung ist mit einem DSL-Modem, mit einer Verarbeitungseinrichtung und mit mindestens einem USB-Port ausgestattet. Wie grundsätzlich bereits bekannt, ist eine solche Zugangseinrichtung derart ausgebildet, dass sie mit ihr in einem LAN, das heißt in einem lokalen Netzwerk, verbundenen Endgeräten einen Zugang zum Internet in einer Standardbetriebsart über das DSL-Festnetz und einer weiteren, hier als Ausweichbetriebsart bezeichneten Betriebsart über das Mobilfunknetz ermöglicht. Letzteres, also die Nutzung der Ausweichbetriebsart ist allerdings daran gebunden, dass die Zugangseinrichtung über den USB-Port mit einer Mobilfunkendeinrichtung verbunden ist, die in einem aktivierten Tethering-Modus betrieben wird.

Erfindungsgemäß ist diese Zugangseinrichtung mit einer Programmanwendung ausgestattet und dazu ausgebildet, gesteuert durch die vorgenannte von der Verarbeitungseinrichtung der Zugangseinrichtung ausgeführte Programmanwendung,
a) das Bestehen einer DSL-Verbindung zum Internet fortwährend zu überwachen und eine gegebenenfalls bestehende DSL-Störung zu detektieren,
b) eine mit dem USB-Port der Zugangseinrichtung verbundene Mobilfunkendeinrichtung mit aktiviertem sowie mit Verbindung zum Internet über das Mobilfunknetz ausgeführtem Tethering-Modus zu detektieren,
c) bei Bestehen einer USB-Verbindung zu einer im Tethering-Modus betriebenen Mobilfunkendeinrichtung mit Mobilfunk-Verbindung zum Internet, im Falle einer detektierten DSL-Störung, automatisiert in die Ausweichbetriebsart umzuschalten,
d) nach Einnahme der Ausweichbetriebsart automatisiert in die Standardbetriebsart zurückzuschalten, sofern für eine vorgegebene, in einem Speicher der Zugangseinrichtung hinterlegte Zeitdauer eine stabile DSL-Verbindung zum Internet besteht.

Entsprechend einer vorteilhaften Ausbildung ist die vorgenannte Internetzugangseinrichtung zudem mit einem integrierten IP-Router für das Routing der IP-Verbindungen des LAN ausgestattet. In Weiterbildung dieser Ausbildungsform ist die Zugangseinrichtung darüber hinaus mit einem DHCP-Server zur Vergabe von IP-Adressen an mit ihr in dem LAN verbundene Endgeräte ausgestattet.

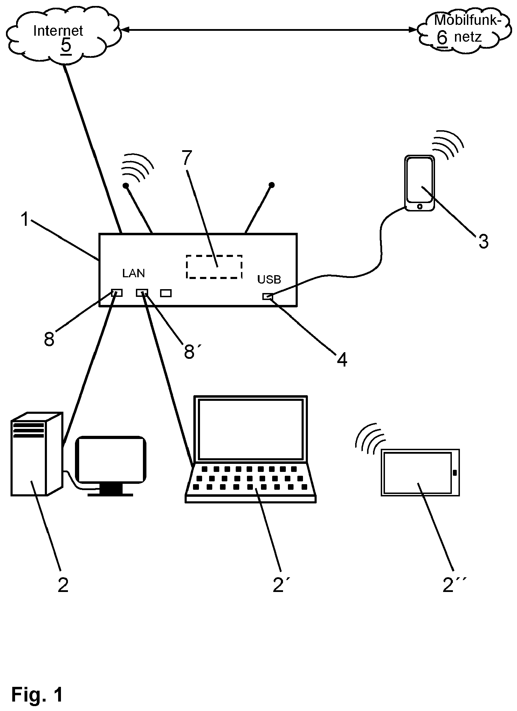

Nachfolgend soll anhand der Fig. 1 ein Ausführungsbeispiel für die Erfindung gegeben und erläutert werden.

Die Fig. 1 zeigt in einer grobschematischen Darstellung ein lokales Netzwerk (LAN), bestehend aus einer erfindungsgemäß ausgebildeten Internetzugangseinrichtung 1 und mehreren mittels dieser gleichzeitig als IP-Router fungierenden Zugangseinrichtung 1 zu dem LAN verbundenen Endgeräten 2; 2'; 2". Neben dem bereits angesprochenen IP-Router, welcher vorzugsweise auch einen DHCP-Server umfasst, weist die Zugangseinrichtung 1 einen WLAN-Access-Point und/oder mehrere LAN-Ports 8, 8' zur Verbindung mittels ihrer in einem LAN zusammenzuführender Endgeräte 2; 2'; 2"auf. Sie weist ferner mindestens einen USB-Port 4 zur direkten leitungsbasierten Verbindung mit einem Endgerät sowie eine Verarbeitungseinrichtung 7 auf.

In einem dafür vorgesehenen (im Detail nicht gezeigten) Speicher der Zugangseinrichtung 1 ist die zur Ausführung des erfindungsgemäßen Verfahrens erforderliche Programmanwendung geladen, welche durch die vorgenannte Verarbeitungseinrichtung 7 der Zugangseinrichtung 1 ausgeführt wird. Durch die Programmanwendung wird insbesondere fortwährend das Bestehen einer DSL-Verbindung der Zugangseinrichtung 1 zum Internet 5 gemonitort. In einer von der Zugangseinrichtung 1 ausgeführten Standardbetriebsart ermöglicht die Zugangseinrichtung 1 den über sie zu dem LAN verbundenen Endgeräten 2; 2'; 2" den Zugang zum Internet 5 über das DSL-Festnetz.

Stellt nun die Programmanwendung im Zuge des Monitorings der DSL-Verbindung eine DSL-Störung fest und detektiert sie gleichzeitig eine an den USB-Port 4 der Zugangseinrichtung 1 angeschlossene Mobilfunkendeinrichtung 3 mit aktiviertem Tethering-Modus und bestehender Verbindung zum Internet 5 über das Mobilfunknetz 6, so wechselt die Zugangseinrichtung 1 automatisiert in die Ausweichbetriebsart. In dieser Ausweichbetriebsart gelangen die sich im LAN mit der Zugangseinrichtung 1 befindenden Endgeräte - beispielhaft gezeigt sind ein PC 2 und ein Laptop 2', die über ein LAN-Kabel mit der Zugangseinrichtung 1 verbunden sind, sowie ein über den WLAN-Access-Point der Zugangseinrichtung 1 mit dem LAN gekoppelter Tablet-PC 2" - über die Zugangseinrichtung 1 und das mit dieser über USB-Kabel direkt verbundene Mobilfunkendgerät 3, welches sich im Tethering-Modus befindet, via Mobilfunk ins Internet 5.

Stellt nun die das Monitoring der DSL-Verfügbarkeit fortsetzende Programmanwendung fest, dass nach einem Wechsel in die Ausweichbetriebsart für eine festgelegte Zeitdauer, beispielsweise 30 Minuten, wieder eine stabile DSL-Verbindung besteht, so wechselt die Zugangseinrichtung 1 automatisiert in die Standardbetriebsart, das heißt zur Nutzung des Internet 5 über das DSL-Festnetz, zurück.

## Patentansprüche

1. Verfahren zum Betreiben einer Internetzugangseirichtung, das heißt einer Zugangseinrichtung (1), über welche mit dieser Zugangseinrichtung (1) in einem lokalen Netzwerk LAN verbundenen Endgeräten (2; 2'; 2") ein Zugang zum Internet (5) ermöglicht wird, wobei die Zugangseinrichtung (1) den Zugang zum Internet (5) in einer Standardbetriebsart über das DSL-Festnetz herstellt, aber außerdem in einer Ausweichbetriebsart betreibbar ist, bei welcher die mit der Zugangseinrichtung im LAN verbundenen Endgeräte (2; 2'; 2") den Zugang zum Internet mittels der Zugangseinrichtung (1) und einer mit dieser direkt verbundenen Mobilfunkendeinrichtung (3) mit aktiviertem Tethering-Modus über das Mobilfunknetz (6) erhalten, **dadurch gekennzeichnet, dass** die dazu ausgebildete Zugangseinrichtung (1), gesteuert durch eine von einer Verarbeitungseinrichtung (7) der Zugangseinrichtung (1) verarbeitete Programmanwendung, bei Detektion einer mit der Zugangseinrichtung (1) direkt verbundenen Mobilfunkendeinrichtung (3) mit aktiviertem Tethering-Modus, zumindest sofern die Zugangseinrichtung (1) außerdem eine DSL-Störung feststellt, automatisiert in die Ausweichbetriebsart wechselt.

2. Verfahren nach Anspruch 1, **dadurch gekennzeichnet, dass** die Zugangseirichtung (1) bei der Detektion einer mit ihr über einen USB-Port (4) der Zugangseinrichtung (1) verbundenen, sich im Tethering-Modus befindenden Mobilfunkendeinrichtung (3) automatisiert in die Ausweichbetriebsart wechselt.

3. Verfahren nach Anspruch 1, wobei die Zugangseinrichtung (1) beim Bestehen oder Herstellen einer direkten Verbindung mit einer sich im aktivierten Tethering-Modus befindenden Mobilfunkendeinrichtung (3) nur im Falle des Erkennens einer DSL-Störung in die Ausweichbetriebsart wechselt, **dadurch gekennzeichnet, dass** die Zugangseinrichtung (1) nach Einnahme der Ausweichbetriebsart, gesteuert durch die von ihr verarbeitete Programmanwendung, automatisiert in die Standardbetriebsart zurückwechselt, sofern für eine vorgegebene, in einem Speicher der Zugangseinrichtung (1) hinterlegte Zeitdauer eine stabile DSL-Verbindung zum Internet (5) besteht.

4. Verfahren nach Anspruch 3, **dadurch gekennzeichnet, dass** die Zugangseinrichtung (1) von der Ausweichbetriebsart zurück in die Standardbetriebsart wechselt, sofern für mindestens 30 Minuten eine stabile DSL-Verbindung besteht.

5. Verfahren nach Anspruch 3, **dadurch gekennzeichnet, dass** die Zeitdauer für das Bestehen einer zur Rückkehr in die Standardbetriebsart führenden stabilen Internetverbindung in einem Konfigurationsmodus der Zugangseinrichtung (1) einstellbar ist.

6. Internetzugangseirichtung, das heißt mit einem DSL-Modem, mit einer Verarbeitungseinrichtung (7) und mit mindestens einem USB-Port (4) ausgestattete Zugangseinrichtung (1), welche mit ihr in einem LAN, das heißt in einem lokalen Netzwerk, verbundenen Endgeräten (2; 2'; 2") einen Zugang zum Internet (5) in einer Standardbetriebsart über das DSL-Festnetz und in einer Ausweichbetriebsart, bei über den USB-Port (4) bestehender direkter Verbindung der Zugangseinrichtung (1) mit einer in einem aktivierten Tethering-Modus betriebenen Mobilfunkendeinrichtung (3), über das Mobilfunknetz (6) ermöglicht, **dadurch gekennzeichnet, dass** die Zugangseinrichtung (1) mit einer Programmanwendung ausgestattet und dazu ausgebildet ist, gesteuert durch diese von der Verarbeitungseinrichtung (7) ausgeführte Programmanwendung,
- das Bestehen einer DSL-Verbindung zum Internet (5) fortwährend zu überwachen und eine gegebenenfalls bestehende DSL-Störung zu detektieren und
- eine mit dem mindestens einen USB-Port (4) der Zugangseinrichtung (1) direkt verbundene Mobilfunkendeinrichtung (3) mit aktiviertem sowie mit Verbindung zum Internet (5) über das Mobilfunknetz (6) ausgeführten Tethering-Modus zu detektieren und
- bei Bestehen einer USB-Verbindung zu einer im Tethering-Modus betriebenen Mobilfunkendeinrichtung (3) mit Mobilfunk-Verbindung zum Internet (5), im Falle einer detektierten DSL-Störung automatisiert in die Ausweichbetriebsart umzuschalten und
- nach Einnahme der Ausweichbetriebsart automatisiert in die Standardbetriebsart zurückzuschalten, sofern für eine vorgegebene, in einem Speicher der Zugangseinrichtung (1) hinterlegte Zeitdauer eine stabile DSL-Verbindung zum Internet besteht.

7. Internetzugangseirichtung nach Anspruch 6, **dadurch gekennzeichnet, dass** diese mit einem integrierten IP-Router für die IP-Verbindungen des LAN ausgestattet ist.

8. Internetzugangseirichtung nach Anspruch 7, **dadurch gekennzeichnet, dass** diese mit einem DHCP-Server zur Vergabe von IP-Adressen an mit ihr in dem LAN verbundene Endgeräte (2; 2'; 2") ausgestattet ist.
